# DEMANDE DE BREVET EUROPEEN

(11) **EP 4 717 575 A1**
(43) Date de publication de la demande: **01.04.2026**
(21) Numéro de dépôt: 25204422.7
(22) Date de dépôt: 24.09.2025
(51) Int. Cl.: B62K 5/027, B62K 5/10, B62K 7/04, B62K 25/04, B62M 6/50

(54) **PROCÉDÉ ET SYSTÈME DE COMMANDE D'UN BASCULEMENT D'UN CADRE AVANT D'UN VÉHICULE TRICYCLE**

(30) Priorité: 26.09.2024 FR 2410321
(71) Demandeur: Ligier Group, 03200 Abrest (FR)
(72) Inventeur: Haudecoeur, Lois, 03200 ABREST (FR); Dechelle, Fabien, 03200 ABREST (FR); Pereira, Nicolas, 03200 ABREST (FR); Yassine, Bilal, 03200 ABREST (FR); Sokhna, Mariama, 03200 ABREST (FR)
(74) Mandataire: Gevers & Orès

(57) **Abrégé**

- Procédé et système de commande d'un basculement d'un cadre avant d'un véhicule tricycle.
- Le système de commande comprend au moins une unité de calcul (7) configurée pour collecter un signal (S1) représentatif d'une présence ou une absence de conducteur assis sur la selle (8) du véhicule tricycle émis par un capteur de présence (C1), pour collecter un signal (S2) représentatif d'une vitesse courante du véhicule tricycle (1) émis par un capteur de vitesse (C2), transmettre au dispositif de blocage (56) un signal (S3) représentatif d'un ordre de commande de blocage du basculement (41) du cadre avant (4) pour bloquer à une position courante le basculement (41) du cadre avant (4), et au système de freinage (20) un signal (S4) représentatif d'un ordre de commande de freinage pour bloquer un déplacement avant et/ou arrière dudit véhicule tricycle (1) au moins si le signal (S1) est représentatif d'une absence du conducteur et si le signal (S2) est représentatif d'une vitesse courante strictement inférieure à une vitesse prédéterminée.

## Description

### Domaine technique

La présente invention concerne un procédé et un système de commande d'un basculement d'un cadre avant d'un véhicule tricycle, notamment destiné à supporter des charges de poids élevé. En particulier, le véhicule tricycle peut être destiné à permettre à un postier de transporter tout ou une partie du courrier et/ou des colis à distribuer lors d'une tournée. Toutefois, il peut être utilisé dans de nombreux autres domaines, comme le domaine des services de livraison. Il peut également être utilisé comme un simple moyen de transport, avec ou sans charge additionnelle.

### État de la technique

Dans le domaine des cycles, il est déjà connu des cycles à deux roues du type dit « scooter » qui sont appréciés pour le confort de conduite qu'il procure en raison du positionnement du conducteur. Cela étant, quand il s'agit de transporter de lourdes charges, ceux-ci peuvent s'avérer inadaptés, notamment par manque de stabilité, que cela soit en course ou à l'arrêt.

Pour améliorer la stabilité d'un cycle, il est connu d'avoir recours à un cycle à trois roues ou tricycle. Cependant, ceux-ci posent des problèmes de maniabilité, notamment de rayons de braquage. Des tricycles munis d'une paire de roues à l'avant ont été proposés et sont désormais couramment utilisés grâce à leur bonne maniabilité. Leur stabilité est néanmoins inférieure à celle d'un tricycle classique avec paire de roues à l'arrière.

Le document FR 3020335 décrit un véhicule tricycle comprenant un cadre arrière et un cadre avant configuré pour permettre l'installation d'un conducteur dudit véhicule. Le cadre avant est articulé en rotation autour d'un axe d'articulation par rapport au cadre arrière de manière à permettre un basculement du cadre avant par rapport au cadre arrière en direction de la chaussée de part et d'autre d'une position verticale. On dispose de la sorte d'un véhicule tricycle présentant une bonne stabilité grâce à son caractère tricycle et une bonne maniabilité par le basculement du cadre avant par rapport au cadre arrière. Par ailleurs, ce véhicule tricycle comprend un frein de stationnement qui, lorsqu'il est activé par l'actionnement d'un levier, bloque simultanément un déplacement avant et/ou arrière du véhicule tricycle et le basculement afin de garder la stabilité du véhicule tricycle en stationnement. Toutefois, cette nécessité d'actionner un levier ne rend pas le véhicule tricycle pleinement ergonomique. En effet, dans le cadre avant de certaines applications comme celle d'un tricycle de livraison, le conducteur peut réaliser beaucoup d'arrêts et est donc amené à bloquer le basculement très régulièrement.

Il existe donc un besoin de trouver une solution permettent d'améliorer l'ergonomie d'un tel tricycle.

### Exposé de l'invention

La présente invention a pour objet de proposer un système et procédé de commande de basculement permettant de remédier à cet inconvénient.

Pour cela, elle concerne un procédé de commande d'un basculement d'un cadre avant d'un véhicule tricycle susceptible de se trouver sur une chaussée (R) par rapport à un cadre arrière du véhicule tricycle, le cadre arrière étant muni d'un groupe motopropulseur et d'une paire de roues entrainée par le groupe motopropulseur, le cadre avant étant configuré pour permettre l'installation d'un conducteur du véhicule tricycle sur une selle, le cadre avant étant articulé en rotation autour d'un axe d'articulation par rapport au cadre arrière de manière à permettre le basculement du cadre avant par rapport au cadre arrière en direction de la chaussée de part et d'autre d'une position verticale, le véhicule tricycle présentant un système de freinage configuré alternativement pour bloquer ou laisser libre un déplacement avant et/ou arrière dudit véhicule tricycle et un dispositif de blocage pour bloquer à une position courante ou laisser libre le basculement du cadre avant.

Selon l'invention, le procédé de commande comprend les étapes suivantes mises en œuvre itérativement :
- une première étape de collecte, mise en œuvre par une unité de calcul, pour collecter un premier signal représentatif d'une présence ou une absence de conducteur assis sur la selle émis par un capteur de présence,
- une deuxième étape de collecte, mise en œuvre par l'unité de calcul, pour collecter un deuxième signal représentatif d'une vitesse courante du véhicule tricycle émis par un capteur de vitesse,
- un ensemble d'étapes suivantes mises en œuvre par l'unité de calcul au moins si le premier signal est représentatif d'une absence du conducteur et si le deuxième signal est représentatif d'une vitesse courante strictement inférieure à une vitesse prédéterminée :
   o une première étape de transmission pour transmettre au dispositif de blocage un troisième signal représentatif d'un ordre de commande de blocage du basculement du cadre avant pour bloquer à une position courante le basculement du cadre avant,
   o une deuxième étape de transmission pour transmettre au système de freinage un quatrième signal représentatif d'un ordre de commande de freinage pour bloquer un déplacement avant et/ou arrière dudit véhicule tricycle.

Ainsi, le procédé permet de bloquer automatiquement le basculement du cadre avant et d'activer automatiquement le système de freinage. Le conducteur peut ainsi réaliser des arrêts, par exemple pour des livraisons, sans avoir à activer le frein de stationnement.

Avantageusement, l'ordre de commande de blocage est élaboré pour que le dispositif de blocage se trouve dans une position de blocage dans laquelle le dispositif de blocage bloque le basculement du cadre avant dans la position courante,
l'ordre de commande de freinage étant élaboré pour que le système de freinage se trouve dans une position de freinage dans laquelle le système de freinage bloque le déplacement avant et/ou arrière dudit véhicule tricycle.

De plus, la première étape de transmission et la deuxième étape de transmission sont suivies :
- d'une troisième étape de collecte, mise en œuvre par l'unité de calcul, pour collecter le premier signal émis par le capteur de présence,
- d'une quatrième étape de collecte, mise en œuvre par l'unité de calcul, pour collecter un cinquième signal représentatif de paramètres de mise en marche du véhicule tricycle,
- d'une troisième étape de transmission, mise en œuvre par l'unité de calcul, pour transmettre un sixième signal représentatif de l'ordre de commande de déblocage au dispositif de blocage, au moins si le premier signal est représentatif d'une présence du conducteur et si les paramètres de mise en marche représentés par le cinquième signal remplissent les conditions de mise en marche du véhicule tricycle, l'ordre de commande de déblocage étant élaboré pour que le dispositif de blocage se trouve dans une position de déblocage dans laquelle le dispositif de blocage laisse libre le basculement du cadre avant.

Par ailleurs, le véhicule tricycle comprend une serrure d'allumage configurée pour recevoir une clé de contact et un sélecteur de mode de conduite du véhicule tricycle, la quatrième étape de collecte comprenant :
- une première sous-étape de collecte, mise en œuvre par l'unité de calcul, pour collecter un septième signal représentatif d'un premier paramètre de mise en marche du véhicule tricycle correspondant une présence d'une clé de contact dans une position de conduite dans la serrure de d'allumage du véhicule tricycle,
- une deuxième sous-étape de collecte, mise en œuvre par l'unité de calcul, pour collecter un huitième signal représentatif d'un deuxième paramètre de mise en marche du véhicule tricycle correspondant à une position du sélecteur de mode de conduite du véhicule tricycle,
les conditions de mise en marche du véhicule tricycle étant remplies pour mettre en œuvre la troisième étape de transmission si une clé de contact se trouve dans une position de conduite dans la serrure d'allumage du véhicule tricycle et si le sélecteur de mode de conduite du véhicule tricycle se trouve dans une position de marche arrière ou une position de marche avant.

En outre, le procédé de commande comprend une étape de collecte, mise en œuvre par l'unité de calcul, pour collecter un neuvième signal représentatif d'une position du système de freinage,
la première étape de transmission et la deuxième étape de transmission étant mises en œuvre en outre si le système de freinage ne se trouve pas dans une position de freinage dans laquelle le système de freinage bloque le déplacement avant et/ou arrière dudit véhicule tricycle.

L'invention concerne également un système de commande d'un basculement d'un cadre avant d'un véhicule tricycle susceptible de se trouver sur une chaussée par rapport à un cadre arrière du véhicule tricycle, le cadre arrière étant muni d'un groupe moto propulseur du véhicule tricycle et d'une paire de roues entrainée par le groupe moto propulseur, le cadre avant étant configuré pour permettre l'installation d'un conducteur du véhicule tricycle sur une selle, le cadre avant étant articulé en rotation autour d'un axe d'articulation par rapport au cadre arrière de manière à permettre le basculement du cadre avant par rapport au cadre arrière en direction de la chaussée de part et d'autre d'une position verticale, le véhicule tricycle présentant un système de freinage et un dispositif de blocage.

Selon l'invention, le système de commande comprend au moins une unité de calcul configurée pour :
- collecter un premier signal représentatif d'une présence ou une absence de conducteur assis sur la selle émis par un capteur de présence,
- collecter un deuxième signal représentatif d'une vitesse courante du véhicule tricycle émis par un capteur de vitesse,
au moins si le premier signal est représentatif d'une absence du conducteur et si le deuxième signal est représentatif d'une vitesse courante strictement inférieure à une vitesse prédéterminée, l'unité de calcul est configurée pour :
- transmettre au dispositif de blocage un troisième signal représentatif d'un ordre de commande de blocage du basculement du cadre avant pour bloquer à une position courante le basculement du cadre avant, et
- transmettre au système de freinage un quatrième signal représentatif d'un ordre de commande de freinage pour bloquer un déplacement avant et/ou arrière dudit véhicule tricycle.

Avantageusement, l'ordre de commande de blocage est élaboré pour que le dispositif de blocage se trouve dans une position de blocage dans laquelle le dispositif de blocage bloque le basculement du cadre avant,
l'ordre de commande de freinage étant élaboré pour que le système de freinage se trouve dans une position de freinage dans laquelle le système de freinage bloque le déplacement avant et/ou arrière dudit véhicule tricycle.

De plus, l'unité de calcul est configurée, après avoir transmis le troisième signal représentatif de l'ordre de commande de blocage et le quatrième signal représentatif de l'ordre de commande de freinage, pour :
- collecter le premier signal représentatif d'une présence ou d'une absence de conducteur sur la selle émis par le capteur de présence,
- collecter un cinquième signal représentatif de paramètres de mise en marche du véhicule tricycle,
- transmettre un sixième signal représentatif de l'ordre de commande de déblocage au dispositif de blocage au moins si le premier signal est représentatif d'une présence du conducteur et si les paramètres de mise en marche du sixième signal remplissent les conditions de mise en marche du véhicule tricycle, l'ordre de commande de déblocage étant élaboré pour que le dispositif de blocage (56) se trouve dans une position de déblocage dans laquelle le dispositif de blocage (56) laisse libre le basculement du cadre avant.

Par ailleurs, le véhicule tricycle comprend une serrure d'allumage configurée pour recevoir une clé de contact et un sélecteur de mode de conduite du véhicule tricycle, l'unité de calcul étant configurée pour :
- collecter un septième signal représentatif d'un premier paramètre de mise en marche du véhicule tricycle correspondant une présence d'une clé de contact dans une position de conduite dans la serrure de d'allumage du véhicule tricycle,
- collecter un huitième signal représentatif d'un deuxième paramètre de mise en marche du véhicule tricycle correspondant à une position du sélecteur de mode de conduite du véhicule tricycle,
les conditions de mise en marche du véhicule tricycle étant remplies si une clé de contact se trouve dans une position de conduite dans la serrure d'allumage du véhicule tricycle et si le sélecteur de mode de conduite du véhicule tricycle se trouve dans une position de marche arrière ou une position de marche avant.

En outre, l'unité de calcul est configurée pour collecter un neuvième signal représentatif d'une position du système de freinage,
l'unité de calcul étant configurée, en outre si le système de freinage ne se trouve pas dans une position de freinage dans laquelle le dispositif de blocage bloque le déplacement avant et/ou arrière dudit véhicule tricycle, pour :
- transmettre au dispositif de blocage le troisième signal représentatif de l'ordre de commande de blocage du basculement du cadre avant pour bloquer à une position courante le basculement du cadre avant,
- transmettre au système de freinage le quatrième signal représentatif de l'ordre de commande de freinage pour bloquer un déplacement avant et/ou arrière dudit véhicule tricycle.

L'invention concerne également un véhicule tricycle qui comporte un système de commande d'un basculement d'un cadre avant d'un véhicule tricycle, tel que décrit cidessus.

### Brève description des figures

Les figures annexées feront bien comprendre comment l'invention peut être réalisée.

Sur ces figures, des références identiques désignent des éléments semblables.
La [Fig.1] représente schématiquement le système de commande.
La [Fig.2] représente schématiquement le procédé de commande.
La [Fig.3] représente une vue de profil du véhicule tricycle.
La [Fig.4] représente une vue en perspective d'un détail d'un exemple de véhicule tricycle comprenant un dispositif de blocage.
La [Fig.5] représente est une vue de l'arrière d'un exemple du véhicule tricycle illustrant de façon schématique le basculement du cadre avant par rapport au cadre arrière du véhicule tricycle.

### Description détaillée

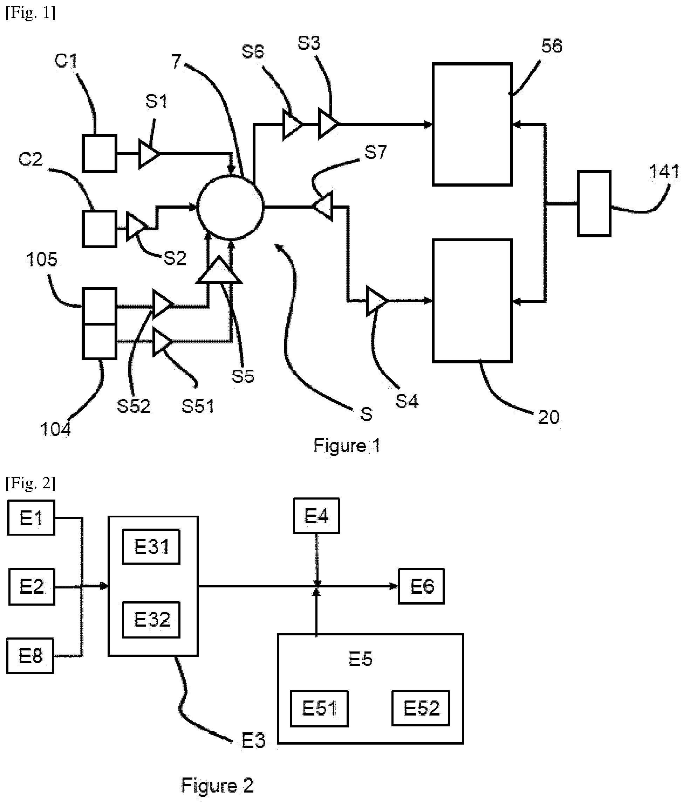

Le système de commande S est représenté schématiquement sur la [Fig.1].

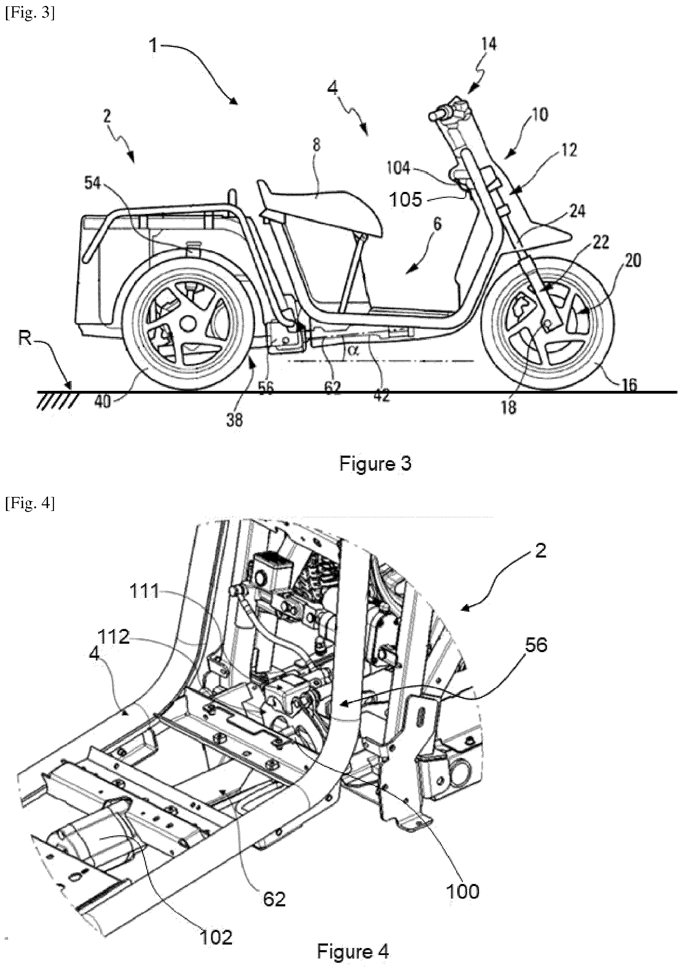

Le système de commande permet de commander un basculement 41 d'un cadre avant 4 d'un véhicule tricycle 1 susceptible de se trouver sur une chaussée R par rapport à un cadre arrière 2 du véhicule tricycle 1 ([Fig.3]).

Le véhicule tricycle 1 comprend le cadre avant 4 et le cadre arrière 2. Le véhicule tricycle 1 comprend en outre un système de freinage 20 configuré pour bloquer un déplacement avant et/ou arrière dudit véhicule tricycle 1 lorsque ledit système de freinage 20 est activé. Le système de freinage 2 correspond au frein de stationnement. Par exemple, le système de freinage 20 se trouve dans une position de freinage (autrement dit, le système de freinage 20 est activé) quand il bloque le déplacement avant et/ou arrière dudit véhicule tricycle 1. Le système de freinage 20 ne se trouve pas dans une position de freinage (autrement dit, le système de freinage 20 est désactivé) quand il laisse libre le déplacement avant et/ou arrière dudit véhicule tricycle 1.

Le cadre arrière 2 est muni d'un groupe moto propulseur 38 du véhicule tricycle 1 et d'une paire de roues 40 entrainée par le groupe moto propulseur 38. De préférence, le groupe moto propulseur 38 est de type électrique. Le cadre avant 4 est configuré pour permettre l'installation d'un conducteur (non représenté) du véhicule tricycle 1 sur une selle 8. Le cadre avant 4 comprend par exemple, une armature 6 sur laquelle sont rapportés une selle 8 et un dispositif de guidage 10.

Le dispositif de guidage 10 peut comprendre une fourche directionnelle 12, un guidon 14 et une roue avant 16. La fourche directionnelle 12 peut être articulée en rotation sur le cadre avant 4 pour permettre d'orienter la roue avant 16 sur la gauche ou sur la droite. Le guidon 14 peut être relié à la fourche directionnelle 12 pour permettre son orientation par le conducteur. La roue avant 16 peut être libre en rotation par rapport à un axe 18 lié à la fourche 12. Selon un mode de réalisation, la roue avant 16 peut être munie du système de freinage 20, par exemple à disque, actionnable à l'aide d'un levier 141 depuis le guidon 14. Selon un autre mode de réalisation, la paire de roues 40 peut être munie du système de freinage 20. Le dispositif de guidage 10 peut comprendre en outre un système de suspension 22 permettant d'amortir la transmission au guidon 14 et à l'armature 6 des chocs encaissés par la roue avant 16. Il s'agit, par exemple, de vérins pneumatiques montés entre des bras 24 de la fourche directionnelle 12 et l'axe 18 de la roue avant 16.

Le cadre avant 4 est articulé en rotation autour d'un axe d'articulation 42 par rapport au cadre arrière 2 de manière à permettre le basculement 41 du cadre avant 4 par rapport au cadre arrière 2 en direction de la chaussée R de part et d'autre d'une position verticale (du cadre avant 4 par rapport à la chaussée R). Le véhicule tricycle 1 peut comprendre une articulation 62 permettant le basculement 41. Le cadre avant 4 forme ainsi un système pendulaire par rapport au cadre arrière 2.

Le véhicule tricycle 1 peut être configuré pour que l'axe d'articulation 42 soit incliné d'un angle α strictement positif par rapport à la chaussée R. Autrement dit, l'axe d'articulation 42 n'est pas horizontal et s'élève de l'arrière vers l'avant du véhicule tricycle 1. De façon non limitative, l'angle α est avantageusement inférieur à 14°, notamment compris entre 5° et 10°. Il peut être fixé, par exemple, à environ 7°. De telles caractéristiques renforcent la bonne tenue du véhicule, à la fois en termes de stabilité et de maniabilité.

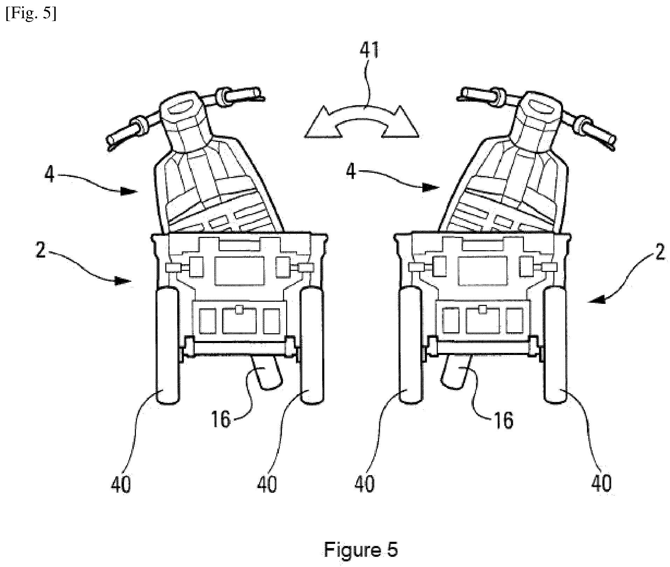

Sur la [Fig.5], le basculement 41 est représenté par la flèche repérée 41. Autrement dit, le cadre avant 4 peut basculer autour de l'axe d'articulation 42 ([Fig.1]) situé dans un plan contenant la verticale et passant par un point milieu de la paire de roues 40. Encore autrement dit, alors que le cadre arrière 2 reste horizontal, c'est-à-dire que les deux roues arrière de la paire de roues 40 restent en contact avec la chaussée R, le cadre avant 4 peut basculer, sous l'effet d'une impulsion donnée par le conducteur, vers la droite ou vers la gauche. Un tel pivotement donne une bonne maniabilité au véhicule tricycle 1, en particulier en permettant au conducteur de virer sans avoir à tourner le guidon 14 ou à tout le moins en le tournant peu.

À la [Fig.5], on voit sur la gauche un basculement du cadre avant 4 vers la gauche permettant de virer vers la gauche et sur la droite un basculement du cadre avant 4 vers la droite permettant de virer vers la droite. Bien qu'étant en présence d'un véhicule tricycle 1, le conducteur peut de la sorte retrouver des sensations de conduite d'un deux roues. L'angle de basculement peut être limité, par exemple, à 30°.

Par exemple, le levier 141 permet manuellement à la fois de bloquer le déplacement avant et/ou arrière dudit véhicule tricycle 1 et le basculement 41.

À titre d'exemple non limitatif, l'articulation 62 permettant le basculement 41 comprend, par exemple, une première pièce ou arbre 100, lié au cadre arrière et une seconde pièce ou palier 102, lié au cadre avant 4, le palier 102 étant articulée en rotation autour de l'arbre. L'arbre 100 et/ou le palier 102 sont ainsi orientés selon l'axe d'articulation 42. Comme représenté sur la [Fig.4], le palier 102 présente ici une portion 112 de disque s'étendant angulairement autour de l'arbre. Une pièce telle qu'une mâchoire 111 est liée au cadre arrière 2 et est configuré pour venir en contact avec ladite portion 112 de disque de manière à bloquer le basculement du cadre avant 4 par rapport au cadre arrière 2 en cas d'actionnement du dispositif de blocage 56 par l'actionnement manuel du système de freinage 20. Le système de freinage 20 est, par exemple, actionnable manuellement à partir de moyens de commande pneumatiques, activés par le levier 141.

Le véhicule tricycle 1 peut comprendre au moins un capteur de présence C1, un capteur de vitesse C2 et un dispositif de blocage 56.

Le capteur de présence C1 est configuré pour détecter une présence ou une absence de conducteur assis sur la selle 8.

Par exemple, le capteur de présence C1 peut correspondre à un capteur qui mesure une pression appliquée sur la selle 8. Si le capteur de présence C1 mesure une pression appliquée sur la selle 8 inférieure à une pression prédéterminée, le capteur de présence C1 peut émettre un signal représentatif d'une absence de conducteur sur la selle 8. En revanche, si le capteur de présence C1 mesure une pression appliquée sur la selle 8 supérieure ou égale à la pression prédéterminée (par exemple, quand le conducteur s'assoit sur la selle 8), le capteur de présence C1 peut émettre un signal représentatif d'une présence du conducteur sur la selle 8.

Le capteur de vitesse C2, quant à lui, est configuré pour mesurer une vitesse courante du véhicule tricycle 1.

Le dispositif de blocage 56 est apte à alternativement bloquer ou débloquer le basculement 41 du cadre avant 4. Le dispositif de blocage 56 se trouve dans une position de blocage quand il bloque le basculement 41. Le dispositif de blocage 56 se trouve dans une position de déblocage quand il laisse libre le basculement 41.

Le système de commande S comprend au moins une unité de calcul 7. Selon un mode de réalisation, l'unité de calcul 7 peut être un module électronique ajouté à un système de gestion électronique embarqué sur le véhicule tricycle 1 (tel qu'un ordinateur de bord). Selon un autre mode de réalisation, l'unité de calcul 7 peut être un module logiciel programmé dans le système de gestion électronique embarqué.

L'unité de calcul 7 est configurée pour collecter un signal S1 représentatif d'une présence ou une absence de conducteur assis sur la selle 8 émis par le capteur de présence C1. Les signaux sont illustrés symboliquement sur la [Fig.1] par des flèches indiquant leur sens de transmission.

L'unité de calcul 7 est également configurée pour collecter un signal S2 représentatif d'une vitesse courante du véhicule tricycle 1 émis par le capteur de vitesse C2.

Au moins si le signal S1 est représentatif d'une absence du conducteur et si le signal S2 est représentatif d'une vitesse courante strictement inférieure à une vitesse prédéterminée, l'unité de calcul 7 est configurée, d'une part, pour transmettre au dispositif de blocage 56 un signal S3 représentatif d'un ordre de commande de blocage du basculement 41 du cadre avant 4 pour bloquer à une position courante le basculement 41 du cadre avant 4, et, d'autre part, pour transmettre au système de freinage 20 un signal S4 représentatif d'un ordre de commande de freinage pour bloquer un déplacement avant et/ou arrière dudit véhicule tricycle 1.

De façon non limitative, la vitesse prédéterminée peut être inférieure ou égale à 5 km/h. Par exemple, la vitesse prédéterminée peut être égale à 0,5 km/h.

Par ailleurs, l'unité de calcul 7 peut être configurée pour collecter un signal S7 représentatif d'une position du système de freinage 20.

Ainsi, si en outre le signal S7 est représentatif d'une information indiquant que le système de freinage 20 ne se trouve pas dans une position de freinage dans laquelle le système de freinage 20 bloque le déplacement avant et/ou arrière dudit véhicule tricycle 1, l'unité de calcul 7 peut être ainsi configurée, pour transmettre au dispositif de blocage 56 le signal S3 représentatif de l'ordre de commande de blocage du basculement 41 du cadre avant 4 pour bloquer à une position courante le basculement 41 du cadre avant 4, et pour transmettre au système de freinage 20 le signal S4 représentatif de l'ordre de commande de freinage pour bloquer un déplacement avant et/ou arrière dudit véhicule tricycle 1.

La transmission des signaux S3 et S4 est immédiate (sans temporisation) pour un blocage du déplacement avant et/ou arrière dudit véhicule tricycle 1 par le système de freinage 20 et un blocage à une position courante du basculement 41 du cadre avant 4 par le dispositif de blocage 56.

L'ordre de commande de blocage représenté par le signal S3 est élaboré pour que le dispositif de blocage 56 se trouve dans une position de blocage dans laquelle le dispositif de blocage 56 bloque le basculement 41 du cadre avant 4.

L'ordre de commande de freinage représenté par le signal S4 est élaboré pour que le système de freinage 20 se trouve dans une position de freinage dans laquelle le système de freinage 20 bloque le déplacement avant et/ou arrière dudit véhicule tricycle 1.

Selon un mode de réalisation, après avoir transmis le signal S3 représentatif de l'ordre de commande de blocage et le signal S4 représentatif de l'ordre de commande de freinage, l'unité de calcul 7 peut être configurée pour :
- collecter le signal S1 représentatif d'une présence ou d'une absence de conducteur sur la selle 8 émis par le capteur de présence C1,
- collecter un signal S5 représentatif de paramètres de mise en marche du véhicule tricycle 1.

L'unité de calcul 7 peut être alors configurée pour transmettre un signal S6 représentatif de l'ordre de commande de déblocage au dispositif de blocage 56 au moins si le signal S1 est représentatif d'une présence du conducteur et si les paramètres de mise en marche du signal S6 remplissent les conditions de mise en marche du véhicule tricycle 1. L'ordre de commande de déblocage est élaboré pour que le dispositif de blocage 56 se trouve dans une position de déblocage dans laquelle le dispositif de blocage 56 laisse libre le basculement 41 du cadre avant 4.

Le signal S5 représentatif de paramètres de mise en marche du véhicule tricycle 1 peut comprendre au moins un signal représentatif d'un paramètre de mise en marche du véhicule tricycle 1.

Par exemple, le véhicule tricycle 1 peut comprendre une serrure d'allumage 104 (autrement appelée serrure de contact d'allumage) configurée pour recevoir une clé de contact (non représentée) et un sélecteur de mode de conduite 105 du véhicule tricycle 1.

Les conditions de mise en marche du véhicule tricycle 1 peuvent être remplies pour amener le dispositif de blocage 56 dans la position de déblocage (par la transmission du signal S6) si une clé de contact se trouve dans une position de conduite dans la serrure d'allumage 104 du véhicule tricycle 1 et si le sélecteur de mode de conduite 105 du véhicule tricycle 1 se trouve dans une position de marche arrière (position R) ou une position de marche avant (position D). Parallèlement, le système de freinage 20 peut être désactivé manuellement par le conducteur.

Par exemple, la clé de contact se trouve dans une position de conduite dans la serrure d'allumage 104 du véhicule tricycle 1 au moins quand le groupe moto propulseur 38 est allumé et éventuellement quand le système anti-vol est désactivé.

Par exemple, le sélecteur de mode de conduite 105 du véhicule tricycle 1 se trouve dans une position de marche arrière ou une position de marche avant. La position de marche avant permet au conducteur de faire avancer le véhicule tricycle 1 lorsqu'il utilise l'accélérateur. La position de marche arrière permet au conducteur de faire reculer le véhicule tricycle 1 lorsqu'il utilise l'accélérateur.

Ainsi, l'unité de calcul 7 peut être configurée pour :
- collecter un signal S51 représentatif d'un premier paramètre de mise en marche du véhicule tricycle 1 correspondant une présence d'une clé de contact dans une position de conduite dans la serrure de d'allumage 104 du véhicule tricycle 1,
- collecter un signal S52 représentatif d'un deuxième paramètre de mise en marche du véhicule tricycle 1 correspondant à une position du sélecteur de mode de conduite 105 du véhicule tricycle 1.

Ainsi, le signal S5 représentatif de paramètres de mise en marche du véhicule tricycle 1 peut comprendre le signal S51 et le signal S52.

Les conditions de mise en marche du véhicule tricycle 1 sont remplies si le signal S51 est représentative d'une information indiquant que la clé de contact se trouve dans une position de conduite dans la serrure d'allumage 104 du véhicule tricycle 1 et si le signal S52 est représentatif d'une information indiquant que le sélecteur de mode de conduite 105 du véhicule tricycle 1 se trouve dans une position de marche arrière ou une position de marche avant.

L'invention concerne également un procédé de commande du basculement 41 du cadre avant 4 du véhicule tricycle. Les étapes du procédé de commande sont représentées schématiquement sur la [Fig.2].

Le procédé de commande comprend les étapes suivantes mises en œuvre itérativement :
- une étape E1 de collecte, mise en œuvre par l'unité de calcul 7, pour collecter un signal S1 représentatif d'une présence ou une absence de conducteur assis sur la selle 8 émis par le capteur de présence C1,
- une étape E2 de collecte, mise en œuvre par l'unité de calcul 7, pour collecter un signal S2 représentatif d'une vitesse courante du véhicule tricycle 1 émis par un capteur de vitesse C2,
- un ensemble E3 d'étapes suivantes mises en œuvre par l'unité de calcul 7 au moins si le signal S1 est représentatif d'une absence du conducteur et si le signal S2 est représentatif d'une vitesse courante strictement inférieure à la vitesse prédéterminée.

L'ensemble d'étapes comprend au moins :
- une étape E31 de transmission pour transmettre au dispositif de blocage 56 un signal S3 représentatif d'un ordre de commande de blocage du basculement 41 du cadre avant 4 pour bloquer à une position courante le basculement 41 du cadre avant 4,
- une étape E32 de transmission pour transmettre au système de freinage 20 un signal S4 représentatif d'un ordre de commande de freinage pour bloquer un déplacement avant et/ou arrière dudit véhicule tricycle 1.

L'étape E31 de transmission et l'étape E32 de transmission sont suivies :
- d'une étape E4 de collecte, mise en œuvre par l'unité de calcul 7, pour collecter le signal S1 émis par le capteur de présence C1,
- d'une étape E5 de collecte, mise en œuvre par l'unité de calcul 7, pour collecter un signal S5 représentatif de paramètres de mise en marche du véhicule tricycle 1,
- d'une étape E6 de transmission, mise en œuvre par l'unité de calcul 7, pour transmettre un signal S6 représentatif de l'ordre de commande de déblocage au dispositif de blocage 56, au moins si le signal S1 est représentatif d'une présence du conducteur et si les paramètres de mise en marche représentés par le signal S5 remplissent les conditions de mise en marche du véhicule tricycle 1, l'ordre de commande de déblocage étant élaboré pour que le dispositif de blocage 56 se trouve dans une position de déblocage dans laquelle le dispositif de blocage 56 laisse libre le basculement 41 du cadre avant 4.

L'étape E5 de collecte peut comprendre :
- une sous-étape E51 de collecte, mise en œuvre par l'unité de calcul 7, pour collecter un signal S51 représentatif d'un premier paramètre de mise en marche du véhicule tricycle 1 correspondant une présence d'une clé de contact dans une position de conduite dans la serrure de d'allumage 104 du véhicule tricycle 1,
- une sous-étape E52 de collecte, mise en œuvre par l'unité de calcul 7, pour collecter un signal S52 représentatif d'un deuxième paramètre de mise en marche du véhicule tricycle 1 correspondant à une position du sélecteur de mode de conduite 105 du véhicule tricycle 1.

Les conditions de mise en marche du véhicule tricycle 1 sont remplies pour mettre en œuvre l'étape E6 de transmission si une clé de contact se trouve dans une position de conduite dans la serrure d'allumage 104 du véhicule tricycle 1 et si le sélecteur de mode de conduite 105 du véhicule tricycle 1 se trouve dans une position de marche arrière ou une position de marche avant.

Le procédé de commande peut comprendre en outre une étape E8 de collecte, mise en œuvre par l'unité de calcul 7, pour collecter un signal S7 représentatif d'une position du système de freinage 20.

L'étape E31 de transmission et l'étape E32 de transmission peuvent être mises en œuvre en outre si le système de freinage 20 ne se trouve pas dans une position de freinage dans laquelle le système de freinage 20 bloque déplacement avant et/ou arrière dudit véhicule tricycle 1, c'est-à-dire si le système de freinage 20 n'est pas activé. Autrement dit, si le signal S7 est représentatif d'une information indiquant que le système de freinage 20 ne se trouve pas dans une position de freinage dans laquelle le système de freinage 20 bloque le déplacement avant et/ou arrière dudit véhicule tricycle 1, l'étape E31 de transmission et l'étape E32 de transmission sont mises en œuvre.

Le procédé de commande n'empêche pas la possibilité d'amener manuellement le système de freinage 20 dans la position de freinage et le dispositif de blocage 56 dans la position de blocage, par exemple à l'aide du levier 141.

De même, le procédé de commande n'empêche pas la possibilité d'amener manuellement le système de freinage 20 hors de sa position de freinage et le dispositif de blocage 56 dans la position de déblocage, par exemple à l'aide du levier 141.

Pour des raisons de sécurité, le blocage du basculement 41 est maintenu, même en cas de coupure de courant, de contact coupé ou d'absence de clé dans la serrure d'allumage 104.

### Liste des références :

1 : véhicule tricycle
2 : cadre arrière
4 : cadre avant
6 : armature
7 : unité de calcul
8 : selle
10 : dispositif de guidage
12 : fourche directionnelle
14 : guidon
16 : roue avant
18 : axe de la roue avant
20 : système de freinage
22 : système de suspension
24 : bras
38 : groupe moto propulseur
40 : paire de roues
41 : basculement
42 : axe d'articulation
56 : dispositif de blocage
62 : articulation
100 : arbre
102 : palier
104 : serrure d'allumage
105 : sélecteur de mode de conduite
111 : mâchoire
112 : portion de disque
141 : levier
C1 : capteur de présence
C2 : capteur de vitesse
R : chaussée
S1 : signal représentatif d'une présence ou une absence de conducteur assis sur la selle émis par le capteur de présence
S2 : signal représentatif d'une vitesse courante du véhicule tricycle émis par le capteur de vitesse
S3 : signal représentatif d'un ordre de commande de blocage du basculement du cadre avant
S4 : signal représentatif d'un ordre de commande de freinage
S5 : signal représentatif de paramètres de mise en marche du véhicule tricycle
S51 : signal représentatif d'un premier paramètre de mise en marche du véhicule tricycle
S52 : signal représentatif d'un deuxième paramètre de mise en marche du véhicule tricycle
S6 : signal représentatif d'un ordre de commande de déblocage
S7 : signal représentatif d'une position du système de freinage
E1 : étape de collecte d'un signal représentatif d'une présence ou une absence de conducteur assis sur la selle
E2 : étape de collecte d'un signal représentatif d'une vitesse courante du véhicule tricycle
E3 : ensemble d'étapes E31 et E32
E31 : étape de transmission d'un signal représentatif d'un ordre de commande de blocage du basculement du cadre avant
E32 : étape de transmission d'un signal représentatif d'un ordre de commande de freinage
E4 : étape de collecte d'un signal émis par le capteur de présence
E5 : étape de collecte d'un signal représentatif de paramètres de mise en marche du véhicule tricycle
E51 : sous-étape de collecte d'un signal représentatif d'un premier paramètre de mise en marche du véhicule tricycle
E52 : sous-étape de collecte d'un signal représentatif d'un deuxième paramètre de mise en marche du véhicule tricycle
E6 : étape de transmission d'un signal représentatif de l'ordre de commande de déblocage

## Revendications

1. Procédé de commande d'un basculement (41) d'un cadre avant (4) d'un véhicule tricycle (1) susceptible de se trouver sur une chaussée (R) par rapport à un cadre arrière (2) du véhicule tricycle (1), le cadre arrière (2) étant muni d'un groupe motopropulseur (38) et d'une paire de roues (40) entrainée par le groupe motopropulseur (38), le cadre avant (4) étant configuré pour permettre l'installation d'un conducteur du véhicule tricycle (1) sur une selle (8), le cadre avant (4) étant articulé en rotation autour d'un axe d'articulation (42) par rapport au cadre arrière (2) de manière à permettre le basculement (41) du cadre avant (4) par rapport au cadre arrière (2) en direction de la chaussée (R) de part et d'autre d'une position verticale, le véhicule tricycle présentant un système de freinage (20) configuré alternativement pour bloquer ou laisser libre un déplacement avant et/ou arrière dudit véhicule tricycle (1) et un dispositif de blocage (56) pour bloquer à une position courante ou laisser libre le basculement (41) du cadre avant (4),
**caractérisé en ce que** le procédé de commande comprend les étapes suivantes mises en œuvre itérativement :
- une première étape (E1) de collecte, mise en œuvre par une unité de calcul (7), pour collecter un premier signal (S1) représentatif d'une présence ou une absence de conducteur assis sur la selle (8) émis par un capteur de présence (C1),
- une deuxième étape (E2) de collecte, mise en œuvre par l'unité de calcul (7), pour collecter un deuxième signal (S2) représentatif d'une vitesse courante du véhicule tricycle (1) émis par un capteur de vitesse (C2),
- un ensemble (E3) d'étapes suivantes mises en œuvre par l'unité de calcul (7) au moins si le premier signal (S1) est représentatif d'une absence du conducteur et si le deuxième signal (S2) est représentatif d'une vitesse courante strictement inférieure à une vitesse prédéterminée :
• une première étape (E31) de transmission pour transmettre au dispositif de blocage (56) un troisième signal (S3) représentatif d'un ordre de commande de blocage du basculement (41) du cadre avant (4) pour bloquer à une position courante le basculement (41) du cadre avant (4),
• une deuxième étape (E32) de transmission pour transmettre au système de freinage (20) un quatrième signal (S4) représentatif d'un ordre de commande de freinage pour bloquer un déplacement avant et/ou arrière dudit véhicule tricycle (1).

2. Procédé selon la revendication 2,
**caractérisé en ce que** l'ordre de commande de blocage est élaboré pour que le dispositif de blocage (56) se trouve dans une position de blocage dans laquelle le dispositif de blocage (56) bloque le basculement (41) du cadre avant (4) dans la position courante,
l'ordre de commande de freinage étant élaboré pour que le système de freinage (20) se trouve dans une position de freinage dans laquelle le système de freinage (20) bloque le déplacement avant et/ou arrière dudit véhicule tricycle (1).

3. Procédé selon l'une des revendications 1 et 2,
**caractérisé en ce que** la première étape (E31) de transmission et la deuxième étape (E32) de transmission sont suivies :
- d'une troisième étape (E4) de collecte, mise en œuvre par l'unité de calcul (7), pour collecter le premier signal (S1) émis par le capteur de présence (C1),
- d'une quatrième étape (E5) de collecte, mise en œuvre par l'unité de calcul (7), pour collecter un cinquième signal (S5) représentatif de paramètres de mise en marche du véhicule tricycle (1),
- d'une troisième étape (E6) de transmission, mise en œuvre par l'unité de calcul (7), pour transmettre un sixième signal (S6) représentatif de l'ordre de commande de déblocage au dispositif de blocage (56), au moins si le premier signal (S1) est représentatif d'une présence du conducteur et si les paramètres de mise en marche représentés par le cinquième signal (S5) remplissent les conditions de mise en marche du véhicule tricycle (1), l'ordre de commande de déblocage étant élaboré pour que le dispositif de blocage (56) se trouve dans une position de déblocage dans laquelle le dispositif de blocage (56) laisse libre le basculement (41) du cadre avant (4).

4. Procédé selon la revendication 3,
**caractérisé en ce que** le véhicule tricycle (1) comprend une serrure d'allumage (104) configurée pour recevoir une clé de contact et un sélecteur de mode de conduite (105) du véhicule tricycle (1),
la quatrième étape (E5) de collecte comprenant :
- une première sous-étape (E51) de collecte, mise en œuvre par l'unité de calcul (7), pour collecter un septième signal (S51) représentatif d'un premier paramètre de mise en marche du véhicule tricycle (1) correspondant une présence d'une clé de contact dans une position de conduite dans la serrure de d'allumage (104) du véhicule tricycle (1),
- une deuxième sous-étape (E52) de collecte, mise en œuvre par l'unité de calcul (7), pour collecter un huitième signal (S52) représentatif d'un deuxième paramètre de mise en marche du véhicule tricycle (1) correspondant à une position du sélecteur de mode de conduite (105) du véhicule tricycle (1),
les conditions de mise en marche du véhicule tricycle (1) étant remplies pour mettre en œuvre la troisième étape (E6) de transmission si une clé de contact se trouve dans une position de conduite dans la serrure d'allumage (104) du véhicule tricycle (1) et si le sélecteur de mode de conduite (105) du véhicule tricycle (1) se trouve dans une position de marche arrière ou une position de marche avant.

5. Procédé selon l'une des revendications 1 à 4,
**caractérisé en ce qu'**il comprend en outre une étape (E8) de collecte, mise en œuvre par l'unité de calcul (7), pour collecter un neuvième signal (S7) représentatif d'une position du système de freinage (20), la première étape (E31) de transmission et la deuxième étape (E32) de transmission étant mises en œuvre en outre si le système de freinage (20) ne se trouve pas dans une position de freinage dans laquelle le système de freinage (20) bloque un déplacement avant et/ ou arrière dudit véhicule tricycle (1).

6. Système de commande d'un basculement (41) d'un cadre avant (4) d'un véhicule tricycle (1) susceptible de se trouver sur une chaussée (R) par rapport à un cadre arrière (2) du véhicule tricycle (1), le cadre arrière (2) étant muni d'un groupe moto propulseur (38) du véhicule tricycle (1) et d'une paire de roues (40) entrainée par le groupe moto propulseur (38), le cadre avant (4) étant configuré pour permettre l'installation d'un conducteur du véhicule tricycle (1) sur une selle (8), le cadre avant (4) étant articulé en rotation autour d'un axe d'articulation (42) par rapport au cadre arrière (2) de manière à permettre le basculement (41) du cadre avant (4) par rapport au cadre arrière (2) en direction de la chaussée (R) de part et d'autre d'une position verticale, le véhicule tricycle présentant un système de freinage (20) et un dispositif de blocage (56),
**caractérisé en ce qu'**il comprend au moins une unité de calcul (7) configurée pour :
- collecter un premier signal (S1) représentatif d'une présence ou une absence de conducteur assis sur la selle (8) émis par un capteur de présence (C1),
- collecter un deuxième signal (S2) représentatif d'une vitesse courante du véhicule tricycle (1) émis par un capteur de vitesse (C2),
au moins si le premier signal (S1) est représentatif d'une absence du conducteur et si le deuxième signal (S2) est représentatif d'une vitesse courante strictement inférieure à une vitesse prédéterminée, l'unité de calcul (7) est configurée pour :
- transmettre au dispositif de blocage (56) un troisième signal (S3) représentatif d'un ordre de commande de blocage du basculement (41) du cadre avant (4) pour bloquer à une position courante le basculement (41) du cadre avant (4), et
- transmettre au système de freinage (20) un quatrième signal (S4) représentatif d'un ordre de commande de freinage pour bloquer un déplacement avant et/ou arrière dudit véhicule tricycle (1).

7. Système selon la revendication 6,
**caractérisé en ce que** l'ordre de commande de blocage est élaboré pour que le dispositif de blocage (56) se trouve dans une position de blocage dans laquelle le dispositif de blocage (56) bloque le basculement (41) du cadre avant (4),
l'ordre de commande de freinage étant élaboré pour que le système de freinage (20) se trouve dans une position de freinage dans laquelle le système de freinage (20) bloque le déplacement avant et/ou arrière dudit véhicule tricycle (1).

8. Système selon l'une des revendications 6 et 7,
**caractérisé en ce que** l'unité de calcul (7) est configurée, après avoir transmis le troisième signal (S3) représentatif de l'ordre de commande de blocage et le quatrième signal (S4) représentatif de l'ordre de commande de freinage, pour :
- collecter le premier signal (S1) représentatif d'une présence ou d'une absence de conducteur sur la selle (8) émis par le capteur de présence (C1),
- collecter un cinquième signal (S5) représentatif de paramètres de mise en marche du véhicule tricycle (1),
- transmettre un sixième signal (S6) représentatif de l'ordre de commande de déblocage au dispositif de blocage (56) au moins si le premier signal (S1) est représentatif d'une présence du conducteur et si les paramètres de mise en marche du sixième signal (S6) remplissent les conditions de mise en marche du véhicule tricycle (1), l'ordre de commande de déblocage étant élaboré pour que le dispositif de blocage (56) se trouve dans une position de déblocage dans laquelle le dispositif de blocage (56) laisse libre le basculement (41) du cadre avant (4).

9. Système selon la revendication 8,
**caractérisé en ce que** le véhicule tricycle (1) comprend une serrure d'allumage (104) configurée pour recevoir une clé de contact et un sélecteur de mode de conduite (105) du véhicule tricycle (1),
l'unité de calcul (7) étant configurée pour :
- collecter un septième signal (S51) représentatif d'un premier paramètre de mise en marche du véhicule tricycle (1) correspondant une présence d'une clé de contact dans une position de conduite dans la serrure de d'allumage (104) du véhicule tricycle (1),
- collecter un huitième signal (S52) représentatif d'un deuxième paramètre de mise en marche du véhicule tricycle (1) correspondant à une position du sélecteur de mode de conduite (105) du véhicule tricycle (1),
les conditions de mise en marche du véhicule tricycle (1) étant remplies si une clé de contact se trouve dans une position de conduite dans la serrure d'allumage (104) du véhicule tricycle (1) et si le sélecteur de mode de conduite (105) du véhicule tricycle (1) se trouve dans une position de marche arrière ou une position de marche avant.

10. Système selon l'une des revendications 6 à 9,
**caractérisé en ce que** l'unité de calcul (7) est configurée pour collecter un neuvième signal (S7) représentatif d'une position du système de freinage (20),
l'unité de calcul (7) étant configurée, en outre si le système de freinage (20) ne se trouve pas dans une position de freinage dans laquelle le système de freinage (20) bloque un déplacement avant et/ ou arrière dudit véhicule tricycle (1), pour :
- transmettre au dispositif de blocage (56) le troisième signal (S3) représentatif de l'ordre de commande de blocage du basculement (41) du cadre avant (4) pour bloquer à une position courante le basculement (41) du cadre avant (4),
- transmettre au système de freinage (20) le quatrième signal (S4) représentatif de l'ordre de commande de freinage pour bloquer un déplacement avant et/ou arrière dudit véhicule tricycle (1).

11. Véhicule tricycle,
**caractérisé en ce qu'**il comporte un système de commande d'un basculement d'un cadre avant d'un véhicule tricycle, tel que spécifié sous l'une quelconque des revendications 6 à 10.
